# NEW EUROPEAN PATENT SPECIFICATION

(11) **EP 2 471 974 B2**
(45) Date of publication and mention of the opposition decision: **27.02.2019**
(45) Mention of the grant of the patent: 16.03.2016
(21) Application number: 11195047.3
(22) Date of filing: 21.12.2011
(51) Int. Cl.: C23C 24/00, C23C 28/04, F01D 5/28

(54) **Gas turbine component having thermal barrier coating and a gas turbine using the component**
Gasturbinenkomponente mit Wärmegrenzbeschichtung und Gasturbine mit der Komponente
Composant de turbine à gaz doté d'un revêtement formant barrière thermique et turbine à gaz utilisant le composant

(30) Priority: 28.12.2010 JP 2010291548
(43) Date of publication of application: 04.07.2012
(73) Proprietor: Mitsubishi Hitachi Power Systems, Ltd., Yokohama 220-8401 (JP)
(72) Inventor: Arikawa, Hideyuki, Tokyo, 100-8220 (JP); Mebata, Akira, Tokyo, 100-8220 (JP); Kojima, Yoshitaka, Tokyo, 100-8220 (JP); Ichikawa, Kunihiro, Tokyo, 100-8220 (JP); Haruyama, Hiroshi, Tokyo, 100-8220 (JP)
(74) Representative: Beetz & Partner mbB

(56) References cited:
- EP-A1- 0 852 223
- EP-A1- 1 609 885
- EP-A1- 1 788 122
- EP-A1- 2 053 141
- EP-A1- 2 128 299
- US-A- 5 773 141
- US-A- 5 871 820
- US-A1- 2006 068 189
- Amarendra K. Rai ET AL: "CMAS-Resistant Thermal Barrier Coatings (TBC)", International Journal of Applied Ceramic Technology, vol. 7, no. 5, 1 September 2010 (2010-09-01), pages 662-674, XP055023168, ISSN: 1546-542X, DOI: 10.1111/j.1744-7402.2009.02373.x

## Description

### BACKGROUND OF THE INVENTION

### 1. Field of the Invention

The present invention relates to gas turbine components such as bucket/nozzles, combustors, and shrouds of gas turbines. The invention particularly relates to gas turbine components that excel in heat resistance and corrosion resistance and suitable for use in high temperature corrosive environments, and to a gas turbine employing such components.

### 2. Description of the Related Art

Operation temperature in gas turbines has become higher year by year with an aim of improving efficiency. To cope with the increase in the operation temperature, some of high temperature components or parts used in gas turbines are adapted to have their surfaces covered with thermal barrier coatings (hereinafter also referred to as TBC) formed of ceramics so as to moderate the component temperature. Although it depends on working conditions, application of TBCs lowers a substrate temperature by 50 to 100°C in general.

JP-62-211387-A, etc. disclose a TBC that comprises, over a substrate by way of a MCrAlY alloy layer, a thermal barrier layer formed from partially stabilized zirconia with low heat conductivity and good heat resistance. M represents at least one of iron (Fe), Ni, and Co, Cr represents chromium, Al represents aluminum, and Y represents yttrium.

It has been a subject of TBCs used in gas turbines to improve heat resistance as to cope with increasing temperature of combustion gas. The TBCs are also demanded to be improved in resistance against particle erosion due to solid particles (oxides mainly) contained in combustion gas. JP-9-78258-A discloses a case where a dense protective layer is provided at the surface of a porous thermal barrier layer with high heat resistance to improve erosion resistance.

European Patent application EP 1788 122 A1 discloses a gas turbine component with a thermal barrier coating system comprising a porous ceramic to which an environmental barrier layer and impregnation layer in the pores of the porous ceramic is applied.

A. K. Rai et al, Int. J. Appl Ceram. Technol 7 [5] "662-674 (2010), studied silica and palladium layers as environmental barrier layer in thermal barrier coatings.

In gas turbines, relatively high grade fuels such as liquefied natural gas (LNG), kerosene, light oil, etc. have been used commonly in view of improving the combustibility and preventing corrosion. Fuels described above contain extremely small amounts of corrosion factors such as sulfur (S) and ash: 0.01 mass% or less S and substantially no ash. Thus, damage to the high temperature components can be mostly prevented.

However, due to rocketing of fuel cost and in terms of resource saving, low grade fuels such as heavy oils has been more used in recent years for gas turbines as well. Low grade fuels contain elements constituting corrosion factors such as sulfur, alkali metals, and vanadium. The elements react with each other or with oxygen (O) or sea salt particles (NaCl, etc.) in combustion air in a complicated manner, thereby forming compounds that cause high temperature corrosion. Such compounds bring about damage to the TBC, particularly, to zirconia layer portions.

### SUMMARY OF THE INVENTION

The present invention is intended to provide a gas turbine component(s) having durability and reliability for use in a corrosive environment such as a turbine employing a low grade fuel, and a gas turbine equipped with the component(s). This object is achieved with the gas turbine components according to claim 1.

A bucket/nozzle for a gas turbine according to the present invention comprises: a substrate made from an alloy containing Ni, Co, or Fe; a bonding layer made from an alloy disposed over the substrate, and; a thermal barrier coating disposed over the bonding layer; wherein the thermal barrier coating includes: a thermal barrier layer of porous ceramics; an environmental barrier layer containing silica; and an impregnation layer having a material containing silica in the pores of the porous ceramics.

The environmental barrier layer supplies a barrier effect against environment and improves corrosion resistance. In addition, a part of the environmental barrier layer is impregnated into the thermal barrier layer so that the adhesion between them is enhanced, which prevents damage to the thermal barrier layer. Consequently, durability and reliability are improved.

### Brief Description of the Drawings

Fig. 1 is a schematic cross sectional view showing an example of a heat resistant part;
Fig. 2 is a perspective view showing the shape of a bucket of a turbine of a first embodiment;
Fig. 3 is a perspective view showing the shape of a nozzle of a turbine of a second embodiment; and
Fig. 4 is a cross sectional view showing the structure of a gas turbine of a third embodiment.

### DESCRIPTION OF THE Preferred Embodiments

A key of the present invention resides in the employment of TBCs that has a corrosion resistant environmental barrier layer disposed on the surface of a thermal barrier layer. Specifically, over an alloy substrate mainly formed from Ni, Co, or Fe, a thermal barrier coating is disposed by way of a bonding layer. The thermal barrier coating comprises a porous thermal barrier layer formed from ceramics and a corrosion resistant environmental barrier layer. Further, an impregnation layer, which is a layer that part of the environmental barrier layer is impregnated into the thermal barrier layer, is present between the environmental barrier layer and the thermal barrier layer.

Specifically, the thermal barrier layer is made of a porous zirconia layer and the environmental barrier layer mainly made of silica, and part of the environmental barrier layer is impregnated into pores of the porous zirconia layer.

Since the environmental barrier layer inhibits contact between a molten salt and the thermal barrier layer, the thermal barrier layer can be prevented from being corroded by molten salts. The impregnation of the environmental barrier layer into the pores of the porous stabilized zirconia layer also enhances adhesion between the two layers. Further, the porous thermal barrier layer present below the impregnation layer yields a thermal stress moderating function.

An example of a heat resistant component/part adapted to have the above configuration includes a substrate of an alloy mainly comprising Ni, Co, or Fe; an alloy layer formed from a MCrAlY alloy or a MCrAl alloy (M represents at least one of Fe, Ni, and Co) covering the substrate; a porous ceramic layer formed from partially stabilized zirconia covering the alloy layer; and a dense glass layer mainly composed of silica covering the ceramic layer. Part of the glass layer is impregnated into the pores in the upper portion of the porous ceramics to form an integrated portion with the glass filled.

The high temperature components in gas turbines provided with the TBCs can suppress the component temperature low by the thermal barrier effect of the TBC compared to components without the TBC. TBCs are often used in gas turbine parts that particularly require high temperature resistance (for example, bucket/nozzles, combustors, turbine shrouds, etc.). It is extremely effective to apply the TBC to high temperature parts of the gas turbine. At first, the corrosion damage to the TBC is to be described in details.

As low grade fuels, low sulfur A heavy oils (LSA heavy oil) containing relatively low sulfur and ash content have been used mainly for medium and small sized gas turbines to the present. There is also a great demand for use of even lower grade fuels, e.g. high sulfur A heavy oils or B, C heavy oils. The low grade fuels contain corrosive factors such as sulfur content, and alkali metals (Na, K) and vanadium (V) in the ash content. According to the specification in Japanese Industrial Standards (JIS) K2205 "heavy oil", for example, the low sulfur A heavy oil (class 1, No. 1 heavy oil) contains 0.5% or less S and 0.05% or less ash, the high sulfur A heavy oil (class 1, No. 2 heavy oil) contains 2.0% or less S and 0.05% or less ash, the B heavy oil (class 2 heavy oil) contains 3.0% or less S and 0.05% or less ash, and the C heavy oil (class 3, No. 1 heavy oil) contains 3.5% or less S and 0.1% or less ash. In some heavy oils of lower grades, the contents for S and ash are not specified. High grade fuels used conventionally contain 0.01 mass% or less S and substantially no ash in general.

Corrosion factors contained in the low grade fuels react with each other or with oxygen (O) or sea salt particles (NaCl, etc.), etc. in combustion air in a complicated manner, thereby forming various compounds which cause high temperature corrosion. Compounds of relatively low melting point are particularly deposited and condensed in a molten state on the surface of high temperature components to bring about violent high temperature corrosion (so-called molten salt corrosion). Since heat resistant alloys used for high temperature components in the gas turbine corrodes violently due to the molten salt corrosion as well, the corrosion is a significant problem for the use of low grade fuels. In particular, protective oxide films of chromia (Cr₂O₃) or alumina (Al₂O₃) formed over the surface of the heat resistant alloy in order to contribute in oxidation resistance and corrosion resistance tend to dissolve into molten salts.

Partially stabilized zirconia in the TBC is also damaged by the molten salt corrosion in the same manner. In an environment where the employed fuel contains more than 0.5% S and more than 0.01% V, conventional TBCs especially tend to suffer damage in the partially stabilized zirconia used as the thermal barrier layer due to the molten salt corrosion. This results in occurrence of peeling in a short time. The damage caused by molten salt corrosion needs to be suppressed to provide a TBC possessing sufficient durability and reliability even for long time operation under corrosive environment of molten salt employing low grade fuels.

The present inventors have provided a thermal barrier layer comprising ceramics by way of a bonding layer and further, covered the surface thereof with an environmental barrier layer in respect to high temperature corrosion. Instances of these layers are, an alloy layer such as a MCrAlY layer or a MCrAl layer as the bonding layer, a porous ceramic layer such as a stabilized zirconia layer as the thermal barrier layer, and a silica-based layer such as a silica glass layer as the environmental barrier layer. The environmental barrier layer is formed such that a portion thereof is impregnated into the pores of the porous thermal barrier layer while the other portion remains on the surface. Thus, the environmental barrier layer inhibits contact between the molten salt and the thermal barrier layer and prevents molten salt corrosion of the thermal barrier layer. The partial impregnation of the environmental barrier layer into the pores of the thermal barrier layer also enhances adhesion between them. Further, the porous thermal barrier layer provides a thermal stress moderating function. Heat resistant components employing such TBCs excel in corrosion resistance and heat resistance.

The TBC of the present invention is suitable for high temperature components used in gas turbines hence the TBC has excellent corrosion resistance and heat resistance in a severe molten salt corrosion environment compared to traditional ones. Improvement of the high temperature components in durability and reliability in gas turbine operations elongates exchanging or inspecting cycle of the high temperature components. As a result, fuel cost in gas turbine operations can be suppressed. In addition, by allowing use of inexpensive low grade fuels in gas turbine operations, it may reduce fuel cost for a gas turbine. High temperature components in a gas turbine that are operated under severe corrosive and high temperature environment are bucket/nozzles, shrouds, combustors, etc.

The high temperature part of the gas turbine according to the present invention has layers disposed over a heat resistant alloy substrate: the layers include a bonding layer, a thermal barrier layer, an impregnation layer, and an environmental barrier layer. The alloy substrate may be formed from various heat resistant alloys that are used for bucket/nozzles, shrouds, combustors or other parts in a gas turbine. Alloys comprising Ni, Co, or Fe as a main ingredient are suitable.

The bonding layer is constructed to have a thermal expansion coefficient between the alloy substrate and the thermal barrier layer as to improve adhesion between them. Further, the bonding layer is preferably made of an alloy having higher corrosion resistance and oxidation resistance than those of the substrate. Alloys that are generally known to be used as bonding layers of TBC can be applied as appropriate. For example, an alloy comprising Ni and Co substantially as a main ingredient with addition of Cr and Al is suitable. Substances such as Y, Hf, Ta, Si, Ce may be further added in a range from 0 to 10% by weight. In particular, an alloy referred to as MCrAlY (M represents one or a plurality of Ni, Fe, and Co) in common is preferably used. The bonding layer is formed most desirably by low pressure plasma spraying. Alternatively, high velocity gas spraying such as HVOF thermal spraying or HVAF thermal spraying, or cold spraying method, or atmospheric plasma spraying may also be applied. The thickness of the bonding layer is preferred to be within a range from 0.05 to 0.3 mm.

The thermal barrier layer is of porous ceramics and is preferably of ZrO₂ ceramics. It is further preferred to be of a partially stabilized zirconia containing at least one member selected from Y₂O₃, MgO, CaO, CeO₂, Sc₂O₃, Er₂O₃, Gd₂O₃, Yb₂O₃, Al₂O₃, SiO₂, and La₂O3. Yttria (Y₂O₃)-partially stabilized zirconia is extremely suitable. The thermal barrier layer made of porous stabilized zirconia can be formed by atmospheric plasma spraying or the like. The thermal barrier layer used in a high temperature component of a gas turbine is preferred to have thickness ranging from 0.1 to 1 mm. If the thickness is less than 0.1 mm, sufficient thermal barrier property as TBC cannot be obtained sometimes. If the thickness is more than 1 mm, heat resistance is lowered and the layer becomes more liable to suffer peeling. The porosity of the thermal barrier layer made of porous stabilized zirconia is preferably within a range from 10 to 30% in terms of area ratio of the pores in a cross sectional structure. If the porosity is less than 10%, the thermal stress moderating mechanism provided by the pores would not sufficiently function, resulting in heat resistance degradation. If the porosity is 30% or higher, the physical strength of the film is lowered which makes peeling more likely to occur.

The environmental barrier layer has a function of avoiding contact between molten salt and the thermal barrier layer, the bonding layer, and the heat resistant alloy substrate so as to prevent damage thereof due to corrosion. Accordingly, an environmental barrier layer to be employed should be such that does not react nor melt upon contact with molten salt but maintains its film state and suppresses passage of the molten salt. In specific, the porosity of the environmental barrier layer is 5% or less. If the porosity is more than 5%, there would be too many open pores and molten salt becomes prone to penetrate and pass through the environmental barrier layer via the pores. The thickness of the environmental barrier layer is within a range from 0.05 to 0.1 mm. If the thickness is less than 0.05 mm, sufficient barrier property cannot be obtained as the environmental barrier layer. If the thickness is 0.1 mm or more, cracking is more prone to occur due to residual stress and thermal stress applied upon film deposition. The cracking reduces the barrier property through the cracks and renders peeling of the environmental barrier layer liable. The environmental barrier layer is formed by using slurry adjusted in viscosity or by using a sol-gel method.

The environmental barrier layer is preferably formed from a silica (SiO₂) based material which is unreactive with molten salt. Assuming a case where a fuel containing sulfur is employed, although it is affected by other present compounds and atmospheric environments, alkali metal sulfates (e.g., Na₂SO₄, K₂SO₄) are the main compounds that tend to deposit and condense on the surface of the high temperature parts. Since alkali metal sulfates have the properties of acid salt, they react with amphoteric oxides such as alumina and chromia, and basic oxides such as zirconia and yttria, thereby dissolved to cause molten salt corrosion. Meanwhile, highly pure silica is an acidic oxide and is unreactive with molten salt, thus shows high durability against molten salt corrosion. The environmental barrier layer comprising silica may be supplied with additives other than silica. However, zirconia or alumina or other ingredients that are not resistant to sulfur or vanadium should be refrained from adding. If the purity of silica is too low, the impurities or other factors may lower corrosion resistance of the environmental barrier layer against molten salt corrosion. Quartz glass material with a silica purity of 90% or higher is preferably used to avoid this.

The environmental barrier layer of the gas turbine component of the invention contains 90% or more silica and no added alumina. The impregnation layer of the gas turbine component of the invention has a material containing 90% or more silica and no added alumina in the pores of the porous ceramics.

As a method of forming an environmental barrier layer mainly composed of silica, a sol-gel method using an alcohol solution of a metal alkoxide is applicable. Alternatively, solutions containing silica precursors such as colloidal silica solution or alkali metal silicate solution may also be used. After the solution is coated to form a precursor layer, the precursor layer is dried and baked, thus forming a silica film. It is also possible to use marketed silica coating agents. However, a final silica layer is required to have a corrosion resistance against molten salt within a range that allows for influences from additives and impurities.

The impregnation layer improves the adhesion between the environmental barrier layer and the porous thermal barrier layer to prevent peeling of the environmental barrier layer. The impregnation layer is constructed from porous ceramics that derive from the thermal barrier layer and silica compounds that derive from the environmental barrier layer. The thickness of the impregnation layer is about 10 to 20% of the thickness of the thermal barrier layer. If the impregnation layer is excessively thin, adhesion between the environmental barrier layer and the thermal barrier layer is insufficient. If the impregnation layer is excessively thick, the porosity of the thermal barrier layer is substantially decreased, whereby lowering the thermal barrier property and decreasing the stress moderating effect. The decrease in stress moderating effect produced by the pores may also render peeling liable to occur. The thickness of the impregnation layer is preferably within a range from about 0.01 to 0.1 mm.

When the environmental barrier layer is to be formed by using a solution containing a silica precursor, the viscosity of the solution is previously adjusted to a proper level. The solution coated over the surface of the porous thermal barrier layer can then partially penetrate into the pores of the thermal barrier layer by a capillary phenomenon. The impregnated solution solidifies and forms silica by way of drying and baking in the pores of the thermal barrier layer comprising porous stabilized zirconia, thus forming an impregnation layer. The thickness (depth) of the impregnation layer can be regulated by adjusting the viscosity of the solution as mentioned or by changing the pore size of the thermal barrier layer.

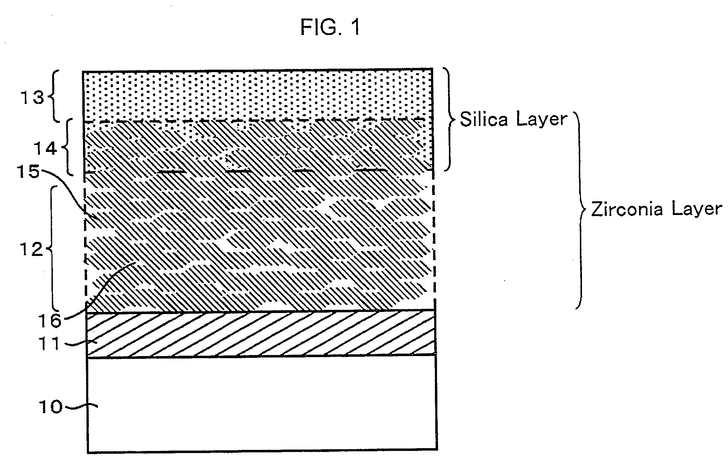

One example of the heat resistant part is to be described with reference to the schematic cross sectional view of Fig. 1. In Fig. 1, over the surface of an alloy substrate 10 mainly composed of Ni, Co, or Fe, a porous thermal barrier layer 12 comprising stabilized zirconia is disposed by way of a bonding layer 11 comprising a MCrAlY alloy or the like, and an environmental barrier layer 13 mainly made of silica that is resistant against high temperature corrosion covers the surface of the thermal barrier layer 12. In addition, the heat resistant part includes an impregnation layer 14 formed by the environmental barrier layer 13 partially impregnating into pores 16 of the thermal barrier layer 12.

The heat resistant components according to the present invention have good durability against corrosive environment. Accordingly, they are suitable as high temperature parts used under a high temperature condition such as bucket/nozzles and combustors of gas turbines. Further, the heat resistant part is applicable not only to the gas turbine but also to other high temperature equipment such as air craft engines.

### [First Embodiment]

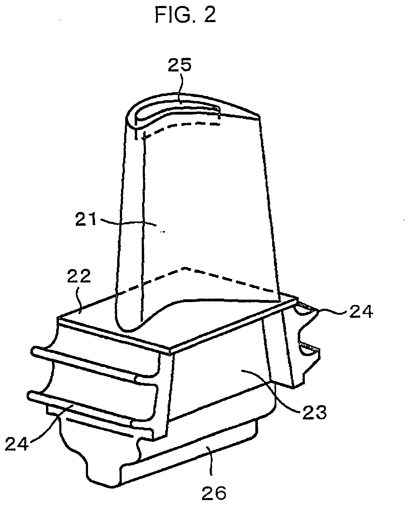

A gas turbine bucket of this embodiment is to be described with reference to Fig. 2. Fig. 2 is a perspective view showing the entire configuration of a bucket of a gas turbine. In Fig. 2, the bucket of the gas turbine is made of a Ni-based heat resistant alloy (Rene 80). The bucket may be used, for example, as a first stage bucket of a gas turbine rotational portion that has three stages of buckets. The bucket includes a blade 21, a platform 22, a shank 23, a seal fin 24, and a chip pocket 25, and is attached by way of a dove tail 26 to a disk. Further, length of the blade portion is 100 mm and length of a portion below the platform 22 is 120 mm in the bucket. A cooling aperture (not illustrated) for cooling the bucket from the inside is formed from the dove tail 26 via the blade 21 as a passage of cooling mediums, e.g., air or steam. TBC was provided at parts of the gas turbine bucket which are exposed to combustion gas, that is, the blade portion 21 and the platform 22. A method of manufacturing the gas turbine bucket is to be described below.

A bonding layer was formed on a substrate by low pressure plasma spraying of a CoNiCrAlY alloy (Co-32wt% Ni-21wt% Cr-8wt% Al-0.5% Y) powder. The layer was further subjected to diffusion heat treatment in vacuum at conditions of 1121°C X 2 h + 843°C X 24 h. The thickness of the bonding layer is about 200 µm.

Then, over the bonding layer, a zirconia layer comprising porous ceramics with a thickness of about 0.5 mm and a porosity of about 20% was formed by atmospheric plasma spraying of a yttria-partially stabilized zirconia (ZrO₂-8wt% Y₂O₃) powder. The surface of the zirconia layer was covered by dipping method with a solution containing silica precursor that is a mixture of a marketed ceramic adhesive/filler and water. In this embodiment, "Aron ceramic C" (trade name) produced by TOAGOSEI CO., LTD. was applied as the marketed agent. Water was added in order to condition the viscosity of the solution: in this case the viscosity was conditioned to about 3 Pa • sec at a room temperature. After coating, the test bucket was naturally dried at a room temperature for 24 hours. The test bucket was then heated in an electric furnace at conditions of 90°C X 1h and 150°C X 1h. Finally, an environmental barrier layer mainly composed of silica was formed on the surface of the porous zirconia layer. From observation of a cross section of a small-sized test piece which was prefabricated in a similar manner, the thicknesses of the environmental barrier layer and the impregnation layer were found to be about 0.1 mm and about 0.05 mm, respectively.

Durability of the gas turbine bucket of this embodiment was tested by using an actual machine. The actual test was performed in a gas turbine that used special A heavy oil as a fuel and in which damage due to molten salt corrosion had been observed. For comparison, a bucket provided with a bonding layer and a thermal barrier layer but not having an environmental barrier layer (bucket provided with existent TBC) was also manufactured in the same method as that for the bucket of this embodiment as described above. The bucket for comparison was put to the test simultaneously. After operation for two years, the tested buckets were observed. No damage was confirmed in the TBC of the gas turbine bucket of this embodiment and it remained intact. On the other hand, in the existent bucket of the comparative example, local peeling in the thermal barrier layer was observed. The thermal barrier layer was physically ripped off and sampled from the peeled portion in order to analyze the cross section of the thermal barrier layer. As a result of the analysis, S and V were detected. It can therefore be considered that peeling was caused by molten salt corrosion. According to these results, it was confirmed that the gas turbine bucket of this embodiment excels in durability compared with the existent gas turbine bucket. It was also confirmed that the bucket of this embodiment possesses sufficient durability and reliability even for a long time operation under corrosive environment of molten salt employing low grade fuels.

The bucket of this embodiment is suitable for applying as a first stage bucket which tends to have high temperature. Not to mention, the bucket can be used also as a second or subsequent stage bucket.

### [Second Embodiment]

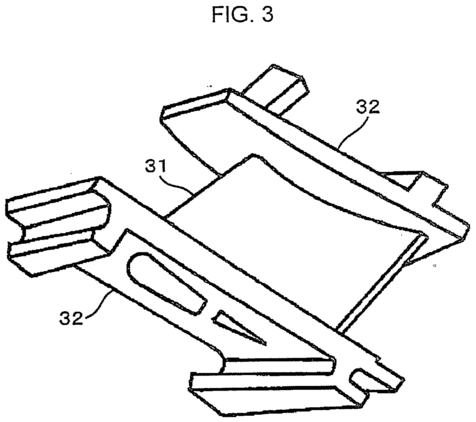

A gas turbine nozzle of this embodiment is to be described with reference to Fig. 3. Fig. 3 is a perspective view showing the entire configuration of a nozzle in a gas turbine. In Fig. 3, the nozzle of the gas turbine is made of a Co-based heat resistant alloy (FSX414: Co-10wt% Ni-29wt% Cr-7.5wt% W-1wt% Fe-0.4wt% Mn-0.8wt% Si) and used, for example, as a first stage nozzle of the gas turbine that has three stages of nozzles. The nozzle has a blade 31 and an end wall portion 32. A cooling aperture (not illustrated) is formed from the end face of the end wall 32 through the blade 31 as a passage for cooling mediums, e.g., air or steam in order to cool the blade from inside. TBC was provided in the same manner as described for the first embodiment at parts of the gas turbine nozzle exposed to combustion gas, that is, surfaces of the blade 31 and the end wall 32 (combustion gas passage surfaces). Specifically, a bonding layer was formed on the combustion gas passage surfaces of the parts by low pressure plasma spraying of a CoNiCrAlY alloy (Co-32wt% Ni-21wt% Cr-8wt% Al-0.5wt% Y) powder. The layer was subjected to diffusion heat treatment in vacuum at conditions of 1121°C X 2h + 843°C X 24h. The thickness of the bonding layer is about 200 µm.

Then, over the bonding layer, a zirconia layer comprising porous ceramics having a thickness of about 0.3 mm and a porosity of about 20% was formed by atmospheric plasma spraying of a yttria-partially stabilized zirconia (ZrO₂-8wt% Y₂O₃) powder. The surface of the zirconia layer was covered by dipping method with a solution containing silica precursor that is a mixture of a marketed ceramic adhesive/filler and water. In this embodiment, "Aron ceramic C" (trade name) produced by TOAGOSEI CO., LTD. was applied as the marketed agent. Water was added in order to condition the viscosity of the solution: in this case the viscosity was conditioned to about 3 Pa • sec at a room temperature. After coating, the test nozzle was naturally dried at a room temperature for 24 hours. The test nozzle was then heated in an electric furnace at conditions of 90°C X 1h and 150°C X 1h. Finally, an environmental barrier layer mainly comprising silica was formed on the surface of the porous zirconia layer. From observation of a cross section of a small-sized test piece prefabricated in the same manner, the thicknesses of the environmental barrier layer and the impregnation layer were found to be about 0.1 mm and about 0.05 mm, respectively.

Durability of the gas turbine nozzle of this embodiment was tested by using an actual machine. The actual test was performed in a gas turbine that used low sulfur A heavy oil as a fuel and in which damage due to molten salt corrosion had been observed. For comparison, a nozzle provided with a bonding layer and a thermal barrier layer but not having an environmental barrier layer (nozzle provided with existent TBC) was also manufactured in the same method as that for the nozzle of this embodiment as described above. The nozzle for comparison was put to the test simultaneously. After operation for two years, the tested nozzles were observed. No damage was confirmed in the TBC of the gas turbine nozzle of this embodiment and it remained intact.

On the other hand, in the existent nozzle of the comparative example, local peeling in the thermal barrier layer was observed. The thermal barrier layer was physically ripped off and sampled from the peeled portion in order to analyze the cross section of the thermal barrier layer. As a result of the analysis, S and V were detected. It can therefore be considered that peeling was caused by molten salt corrosion. According to these results, it was confirmed that the gas turbine nozzle of this embodiment excels in durability compared with the existent gas turbine nozzle. It was also confirmed that the nozzle of this embodiment possesses sufficient durability and reliability even for a long time operation under corrosive environment of molten salt employing low grade fuels.

The nozzle of this embodiment is suitable for applying as a first stage nozzle which tends to have high temperature. Not to mention, the nozzle can be used also as a second or subsequent stage nozzle.

### [Third Embodiment]

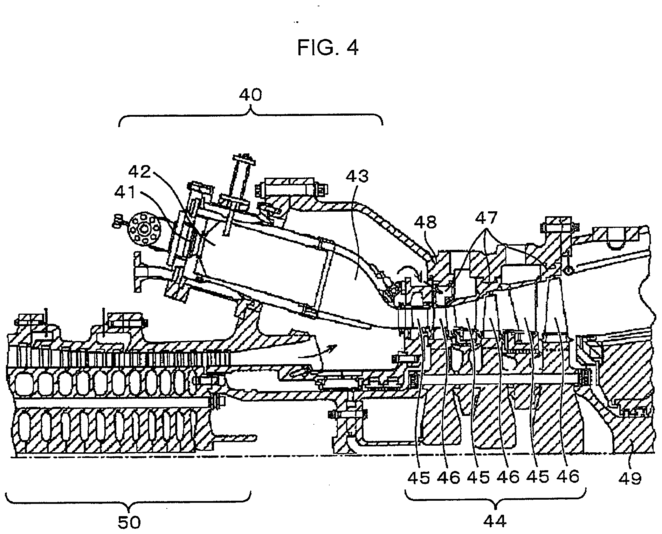

Fig. 4 is a schematic cross sectional view showing a main portion of a gas turbine used for electric power generation. The gas turbine includes, within a turbine casing 48, a rotary shaft (rotor) 49 at the center, and a turbine portion 44 that comprises buckets 46 disposed at the periphery of the rotary shaft 49, nozzles 45 supported at the side of the casing 48, and a turbine shroud 47. The gas turbine also has a compressor 50 coupled to the turbine 44 and a combustor 40. The compressor 50 intakes atmospheric air for use as a compressed air for combustion and cooling. The combustor 40 has a combustor nozzle 41 that mixes the compressed air supplied from the compressor 50 with a supplied fuel (not illustrated) and injects the mixture. The gas mixture is burnt in a combustor liner 42 whereby generating high temperature and high pressure combustion gas. The combustion gas is supplied to the turbine 44 via a transition piece (tail cylinder) 43 to rotate the rotor 49 at a high speed. A portion of the compressed air exhausted from the compressor 50 is used as an internal cooling air for the liner 42 and the transition piece 43 of the combustor 40, and the nozzles 45 and the buckets 46 of the turbine. The high temperature and high pressure combustion gas generated in the combustor 40 flows through the transition piece 43 and is rectified by the turbine nozzles 45, and then injected to the buckets 46 to rotationally drive the turbine 44. Although not illustrated, electric power is normally generated by using a generator coupled to the end of the rotary shaft 49.

This embodiment is such that applies both the described bucket 46 and nozzle 45 in the first and second embodiments as the first stage bucket/nozzles, positioned at a high temperature side in the rotational portion of a gas turbine. In addition, in this embodiment, other parts were also provided with a ceramic coating layer that has an environmental barrier layer by a method basically according to that described for the second embodiment: the parts are, inner circumferential surface of the combustor liner 42 and the transition piece 43 which serves as a combustion gas channel, and the surface of the combustion gas channel of the turbine shroud 47 at the first stage.

Specifically, a bonding layer was formed on the combustion gas passage surfaces of the parts by atmospheric plasma spraying of a CoNiCrAlY alloy (Co-32wt% Ni-21wt% Cr-8wt% A1-0.5wt% Y) powder. The thickness of the bonding layer is about 200 µm. Then, over the bonding layer, a zirconia layer comprising porous ceramics with a thickness of about 0.3 mm and a porosity of about 20% was formed by atmospheric plasma spraying of a yttria-partially stabilized zirconia (ZrO₂-8wt% Y₂O₃) powder. The surface of the zirconia layer was covered by dipping method with a solution that is a mixture of a marketed ceramic adhesive/filler and water containing silica precursor. "Aron ceramic C" (trade name) produced by TOAGOSEI CO., LTD. was applied as the marketed agent. Water was added in order to condition the viscosity of the solution: in this case the viscosity was conditioned to about 3 Pa • sec at a room temperature. After coating, the parts were naturally dried at a room temperature for 24 hours. The parts were then heated in an electric furnace at conditions of 90°C X 1h and 150°C X 1h. Finally, an environmental barrier layer mainly composed of silica was formed on the surface of the porous zirconia layer.

In this embodiment, the ceramic coating layer including the environmental barrier layer of the present invention is applied to the first stage nozzle, the first stage bucket, and the first stage shroud in the turbine 44 configured with three stages. However, the present invention may also be provided to the subsequent second stage and third stage. The present invention may also be applied to all or selected stages of turbines having other numbers of stages, for example, two or four stages.

The gas turbine of this embodiment having the constitution as above was operated by using low sulfur A heavy oil as the fuel. After operation for two years, each of the parts was observed. Damage due to molten salt corrosion was scarcely observed in the TBC of this embodiment for each part of the gas turbine and they remained intact. On the other hand, in the gas turbine using the existent TBC not having the environmental barrier layer of the invention, local peeling due to molten salt corrosion was confirmed in the heat barrier layer of the TBC in a number of components after operation for one year. Thus, repair or replacement of those parts were necessary. The thermal barrier layer was physically ripped off and sampled from the peeled portion of TBC in order to analyze the cross section of the thermal barrier layer. As a result, S and V were detected.

The result described above indicates the fact that the great corrosion resistance of the high temperature parts allows the gas turbine of this embodiment to operate with high reliability while employing an inexpensive low grade fuel. The gas turbine excels in economical efficiency and operation stability and is suitable for power generation plants. It also has sufficient durability and reliability for long time operation under corrosive environment of molten salt employing a low grade fuel. Further, even when the turbine uses low grade fuels, e.g. high sulfur A heavy oils or B, C heavy oils, containing more corrosive ingredients than the low sulfur A heavy oil used in this embodiment, the high temperature parts can be expected to show high durability.

The above embodiments of the invention as well as the appended claims and figures show multiple characterizing features of the invention in specific combinations. The skilled person will easily be able to consider further combinations or sub-combinations of these features in order to adapt the invention as defined in the in the claims to his specific needs.

## Claims

1. A gas turbine component
for use in a corrosive environment of molten salt employing low grade fuels,
the gas turbine component comprising
a substrate (10)
made from an alloy
containing Ni, Co, or Fe,
a bonding layer (11)
made from an alloy
disposed over the substrate (10), and
a thermal barrier coating (12, 13, 14) disposed over the bonding layer (11),
wherein the thermal barrier coating includes:;
a thermal barrier layer (12) of porous ceramics;
an environmental barrier layer (13) wherein
the thickness of the environmental barrier layer (13) is from 0.05 to 0.1 mm and wherein
the porosity of the environmental barrier layer (13) is 5% or less
containing 90% or more silica and
no added alumina; and
an impregnation layer (14)
having a material
containing 90% or more silica and
no added alumina in the pores of the porous ceramics.

2. A gas turbine component according to claim 1, wherein the thermal barrier layer (12) is made from zirconia.

3. A gas turbine component according to any one of claims 1 or 2, wherein the thickness of the thermal barrier layer (12) is from 0.1 to 1 mm.

4. A gas turbine component according to any one of claims 1 to 3, wherein the porosity of the thermal barrier layer (12) is within a range from 10 to 30%.

5. A gas turbine component according to any one of claims 1 to 4, wherein the thickness of the impregnation layer (14) is from 0.01 to 0.1 mm.

6. A gas turbine component according to any one of claims 1 to 5, wherein the environmental barrier layer (13) is a layer formed by using a solution containing a silica precursor.

7. A gas turbine component according to any one of claims 1 to 6, wherein the bonding layer (11) is of a MCrAlY alloy or MCrAl alloy, in which M represents at least one of Fe, Ni, and Co, and the porous ceramics is of partially stabilized zirconia.

8. A gas turbine component according to one of the preceding claims, wherein the gas turbine component is formed as a gas turbine combustor.

9. A gas turbine component according to one of the preceding claims, wherein the gas turbine component is formed as a gas turbine shroud.

10. A gas turbine component according to one of claims 1 - 7, wherein the gas turbine component is a gas turbine bucket/nozzle.

11. A gas turbine comprising any of the bucket/nozzle according to claim 10, the combustor according to claim 8, and the shroud according to claim 9.

## Patentansprüche

1. Gasturbinenkomponente zur Verwendung in einer korrosiven Umgebung schmelzflüssiger Salze für die Verwendung von minderwertigen Brennstoffen, wobei die Gasturbinenkomponente umfasst:
ein Substrat (10), welches aus einer Legierung besteht, welche Ni, Co oder Fe enthält,
eine Bindungsschicht (11), welche aus einer Legierung besteht, die über dem Substrat (10) angeordnet ist, und
eine Wärmegrenzbeschichtung (12, 13, 14), welche über der Bindungsschicht (11) angeordnet ist;
wobei die Wärmegrenzbeschichtung Folgendes enthält:
eine Wärmegrenzschicht (12) aus poröser Keramik;
eine Umweltsperrschicht (13), wobei die Dicke der Umweltsperrschicht (13) zwischen 0,05 bis 1 mm beträgt, wobei die Porosität der Umweltsperrschicht (13) 5% oder weniger beträgt, und die 90% oder mehr Siliciumdioxid und kein zugegebenes Aluminiumoxid enthält; und
eine Imprägnierschicht (14), welche in den Poren der porösen Keramik ein Material aufweist, das 90% oder mehr Siliciumdioxid und kein zugegebenes Aluminiumoxid enthält.

2. Gasturbinenkomponente nach Anspruch 1, wobei die Wärmegrenzschicht (12) aus Zirkonoxid besteht.

3. Gasturbinenkomponente nach Anspruch 1 oder 2, wobei die Dicke der Wärmegrenzschicht (12) zwischen 0,1 bis 1 mm beträgt.

4. Die Gasturbinenkomponente nach einem der Ansprüche 1 bis 3, wobei die Porosität der Wärmegrenzschicht (12) in einem Bereich von 10 bis 30% liegt.

5. Gasturbinenkomponente nach einem der Ansprüche 1 bis 4, wobei die Dicke der Imprägnierschicht (14) zwischen 0,01 und 0,1 mm liegt.

6. Gasturbinenkomponente nach einem der Ansprüche 1 bis 6, wobei die Umweltsperrschicht (13) eine Schicht ist, welche unter Verwendung einer Lösung ausgebildet wurde, welche eine Siliciumdioxid-Vorstufe enthält.

7. Gasturbinenkomponente nach einem der Ansprüche 1 bis 6, wobei die Bindungsschicht (11) aus einer MCrAlY-Legierung oder einer MCrAl-Legierung besteht, in welcher M mindestens eines der folgenden Elemente bezeichnet: Fe, Ni und Co, und die poröse Keramik aus teilweise stabilisiertem Zirkonoxid besteht.

8. Gasturbinenkomponente nach einem der vorherigen Ansprüche, wobei die Gasturbinenkomponente als Gasturbinen-Brennkammer ausgebildet ist.

9. Gasturbinenkomponente nach einem der vorherigen Ansprüche, wobei die Gasturbinenkomponente als Gasturbinen-Mantelring ausgebildet ist.

10. Gasturbinenkomponente nach einem der Ansprüche 1 bis 7, wobei die Gasturbinenkomponente eine Gasturbinen-Schaufel/Düse ist.

11. Gasturbine, welche irgendeines der Folgenden enthält:
die Schaufel/Düse nach Anspruch 10,
die Brennkammer nach Anspruch 8, sowie
den Mantelring nach Anspruch 9.

## Revendications

1. Composant de turbine à gaz pour une utilisation dans un environnement corrosif de sel fondu employant des combustibles de qualité inférieure, le composant de turbine à gaz comprenant un substrat (10) constitué d'un alliage contenant Ni, Co, ou Fe, une couche de liaison (11) constituée d'un alliage disposée sur le substrat (10), et
un revêtement (12, 13, 14) de barrière thermique disposé sur la couche de liaison (11) ;
dans lequel le revêtement de barrière thermique inclut :
une couche (12) de barrière thermique de céramique poreuse ;
une couche (13) de barrière environnementale, l'épaisseur de la couche (13) de barrière environnementale étant de 0,05 à 0,1 mm et la porosité de la couche (13) de barrière environnementale étant 5% ou moins, ladite couche (13) de barrière environnementale contenant 90% ou plus de silice et pas d'alumine ajoutée ; et
une couche (14) d'imprégnation ayant un matériau contenant 90% ou plus de silice et pas d'alumine ajoutée dans les pores de la céramique poreuse.

2. Composant de turbine à gaz selon la revendication 1, dans lequel la couche (12) de barrière thermique est constitué d'oxyde de zirconium.

3. Composant de turbine à gaz selon la revendication 1 ou 2, dans lequel l'épaisseur de la couche (12) de barrière thermique est de 0,1 à 1 mm.

4. Composant de turbine à gaz selon l'une quelconque des revendications 1 à 3, dans lequel la porosité de la couche (12) de barrière thermique est dans une plage de 10 à 30%.

5. Composant de turbine à gaz selon l'une quelconque des revendications 1 à 4, dans lequel l'épaisseur de la couche (14) d'imprégnation est de 0,01 à 0,1 mm.

6. Composant de turbine à gaz selon l'une quelconque des revendications 1 à 5, dans lequel la couche (13) de barrière environnementale est une couche formée en utilisant une solution contenant un précurseur de silice.

7. Composant de turbine à gaz selon l'une quelconque des revendications 1 à 6, dans lequel la couche de liaison (11) est d'un alliage MCrAlY ou d'un alliage MCrAl, dans lequel M représente au moins un parmi Fe, Ni, et Co, et la céramique poreuse est d'oxyde de zirconium partiellement stabilisé.

8. Composant de turbine à gaz selon l'une des revendications précédentes, dans lequel le composant de turbine à gaz est formé comme une chambre de combustion de turbine à gaz.

9. Composant de turbine à gaz selon l'une des revendications précédentes, dans lequel le composant de turbine à gaz est formé comme un carénage de turbine à gaz.

10. Composant de turbine à gaz selon l'une des revendications 1 à 7, dans lequel le composant de turbine à gaz est une aube/buse de turbine à gaz.

11. Turbine à gaz comprenant un quelconque parmi
l'aube/ la buse selon la revendication 10,
la chambre de combustion selon la revendication 8, et
le carénage selon la revendication 9.
